# EUROPÄISCHE PATENTSCHRIFT

(11) **EP 1 925 244 B1**
(45) Veröffentlichungstag und Bekanntmachung des Hinweises auf die Patenterteilung: **21.10.2009**
(21) Anmeldenummer: 06024340.9
(22) Anmeldetag: 23.11.2006
(51) Int. Cl.: A47J 45/07

(54) **Kochgefäss**
Cooking vessel
Récipient de cuisson

(43) Veröffentlichungstag der Anmeldung: 28.05.2008
(73) Patentinhaber: WMF WÜRTTEMBERGISCHE METALLWARENFABRIK AG, 73309 Geislingen/Steige (DE)
(72) Erfinder: Abele, Werner, 89558 Böhmenkirch (DE); Kaupp, Heinz, 73342 Bad Ditzenbach (DE); Kiefer, Alexander, 73329 Kuchen (DE); Neumayer, Martin, 89547 Gerstetten-Dettingen (DE)
(74) Vertreter: Grünecker, Kinkeldey, Stockmair & Schwanhäusser Anwaltssozietät

(56) Entgegenhaltungen:
- FR-A- 1 163 172
- FR-A1- 2 788 956
- GB-A- 1 262 434
- US-A- 5 887 751

## Beschreibung

Die Erfindung bezieht sich auf ein Kochgefäß, insbesondere eine Pfanne, der im Oberbegriff von Anspruch 1 erläuterten Art.

Ein derartiges Kochgefäß ist aus der FR-A-1 163 172 bekannt. Diese Druckschrift zeigt eine Pfanne mit einem über eine relative Verschwenkbewegung lösbar am Pfannenkörper zu befestigenden Griff. Die Befestigung enthält formschlüssige Eingriffsmittel und Anschlagflächen, die jedoch wenig zweckmäßig angeordnet sind. Die bekannte Pfanne hat beispielsweise kein oberes Anschlagflächenpaar und einen Drehzapfen statt des Hackens. Dadurch öffnet sich an der Oberseite des Griffs eine Einkerbung, die sehr verschmutzungsanfällig ist.

Aus der US-A-5,887,751 ist eine verlängerte Griffbefestigung ersichtlich, die durch Verschwenken lösbar und befestigbar ist. Aber auch hier ist ein Spalt an der Oberseite nicht zu vermeiden.

Kochgefäße, insbesondere Pfannen, mit abnehmbaren Griffen sind in großer Zahl bekannt. So zeigt beispielsweise das DE 202 03 566 ein Kochgefäß, dessen Griff auf einen von der Wandung des Kochgefäßes vorstehenden Absatz aufgesteckt und mittels einer Rastverriegelung mit einem federnd längs bewegbar gelagerten Halteknopf befestigt ist. Das Kochgefäß ist eine Pfanne und der Griff der übliche Stielgriff dafür. Der Absatz hat die Form eines Klotzes, der in Richtung der Längserstreckung des Stielgriffes an der Wandung befestigt ist. Der Stielgriff ist an seiner der Wandung zugewandten Seite mit einer Manschette, offensichtlich die übliche Flammschutzmanschette, versehen, die über den Ansatz in einer Richtung parallel zur Längserstreckung des Stielgriffs im Gebrauch aufgeschoben wird. Offensichtlich rastet dann die Rastverriegelung ein. Das Aufstecken des Stielgriffs auf den Ansatz erfordert jedoch eine korrekte Positionierung, die durch die übliche Sicht von schräg oben, wenn die Pfanne beispielsweise auf dem Herd steht, nur unzulänglich angepeilt werden kann. Der Benutzer muss demzufolge entweder die Pfanne schräg anheben, was bei heißen Pfannen, die beispielsweise in einem Backofen eingestellt und wieder mit Hilfe des Griffes daraus entfernt werden sollen, ein Problem darstellt, oder der Benutzer muss seine Augen in Höhe des Ansatzes bringen. Da beim Aufstecken des Stielgriffs gleichzeitig eine ausreichende Kraft in Richtung auf die Pfanne aufgebracht werden muss, um den Halteknopf gegen die Kraft seiner Feder aus dem Weg zu drücken, muss die Pfanne möglicherweise zunächst gegen ein Hindernis geschoben werden, damit der Stielgriff aufgedrückt werden kann. Beides erschwert die Handhabung des bekannten Kochgefäßes beträchtlich. Darüber hinaus liegt an der Verbindungsstelle zwischen Stielgriff und Pfanne ein nicht unbeträchtliches Dreh- bzw. Biegemoment an, beispielsweise wenn eine gefüllte Pfanne am Stielgriff getragen wird. Dieses Drehmoment wirkt voll auf die Verriegelung, so dass die Gefahr besteht, dass diese beschädigt oder, was problematischer wäre, eventuelle sogar gelöst wird, beispielsweise wenn der Benutzer mit der gefüllten Pfanne irgendwo anstößt.

Eine weitere abnehmbare Topfgriffstruktur für ein Kochgeschirr ist aus der DE 201 08 901 bekannt. Auch hier ist das bevorzugte Ausführungsbeispiel eine Pfanne mit Stielgriff. Die Befestigungseinrichtung für den Stielgriff enthält eine Griffstange, die in Verlängerung der Längserstreckung des Stielgriffs mit ihrem einen Ende an der Pfanne angeschweißt ist. Das andere Ende ist mit einer Riegelöffnung versehen, durch die sich ein federbelasteter Riegel erstreckt, der im Stielgriff gelagert ist. Zum Aufstecken des Stielgriffs muss der Stielgriff mit einer engen Öffnung über die Griffstange geschoben werden, was zu den bereits oben erwähnten Handhabungsschwierigkeiten führt. Auch bei dieser Topfgriffstruktur liegt im Wesentlichen das gesamte Drehmoment auf dem Verriegelungselement, wiederum mit den oben beschriebenen Nachteilen.

Ein weiterer abnehmbarer Griff für eine Kochgefäß ist aus der DE 90 00 284 bekannt. Hier wird der Griff durch eine federbelastete Druckstange durchsetzt, an deren wandungsseitigen Ende ein Konus eines Verriegelungselementes befestigt ist, der mit Kugeln zusammenwirkt, die bei Entlastung der Feder in Ausnehmungen gedrückt,werden, die an einer mit der Wandung des Kochgefäßes verbundenen Gewindehülse vorgesehen sind. Aber auch hier erfolgt das Einsetzen des Griffes in Richtung seiner Längserstreckung, so dass sich die oben beschriebenen Nachteile ergeben. Ein zwischen dem Griff und der Gewindebuchse angeordnetes Distanzrohr soll Biegekräfte aufnehmen, wirkt jedoch als Griffverlängerung, so dass die kraftaufnehmende Wirkung eher gering ist.

Der Erfindung liegt somit die Aufgabe zugrunde, ein Kochgefäß mit einem besser handhabbaren, abnehmbaren Griff zu schaffen.

Die Aufgabe wird durch die im Anspruch 1 angegebenen Merkmale gelöst.

Durch die erfindungsgemäße Ausgestaltung der Befestigungseinrichtung wird ein Befestigen des Griffes durch eine relative Verschwenkbewegung von Griff und Gefäßkörper möglich, wobei das Ansetzen des Griffes auch von schräg oben (oder unten), d.h. im wesentlichen unabhängig von einer bestimmten und begrenzten Sichtrichtung durch den Benutzer, möglich ist und demzufolge wesentlich besser überwacht werden kann, als dies beim im wesentlichen waagerechten Einsetzen der Fall ist. Darüber hinaus bietet eine gekrümmte Führung für eine Verschwenkbewegung des Griffes eine wesentlich höhere Sicherheit gegen ein unbeabsichtigtes Lösen der Befestigung. So kann beispielsweise der Griff nicht mehr durch ein einfaches Ziehen entlang seiner Erstreckungsrichtung von dem Kochgefäß gelöst werden, selbst wenn eine zusätzliche Verriegelung versagt.

Vorteilhafte Weiterbildungen der Erfindung sind den Unteransprüchen zu entnehmen.

Ein in der Befestigungseinrichtung vorgesehener Anschlag kann auf einfache Weise ein Biege- bzw. Drehmoment aufnehmen, das beim Anheben eines Kochgefäßes am Griff auf die Verbindung vom Griff zum Kochgefäß einwirkt.

Ist dieser Anschlag am im Gebrauch unteren Teil des Griffes, unterhalb der Führung, vorgesehen, so bietet er eine optimale Kraftaufnahme.

Auch eine seitliche Verlagerung des Griffs relativ zum Kochgefäß wird auf konstruktiv einfache Weise durch einen Anschlag verhindert.

Das Befestigen des Griffes wird weiter erleichtert, wenn der Führung eine Einlauffläche zugeordnet ist, durch die das Eingriffselement sicher in die Führung eingeleitet wird.

Bevorzugt weisen die Führung und das Eingriffselement komplementäre, d.h. gleich große und gleich geformte, Außenkonturen auf, so dass das Eingriffselement ohne größeres Spiel in der Führung aufgenommen ist und ebenfalls Biegekräfte bzw. ein Drehmoment aufnehmen kann.

Durch einen Hinterschneidungsbereich am Eingriffselement und der Führung kann ein unbeabsichtigtes Lösen des Griffes weiter erschwert werden.

Die Führung ist bevorzugt gekrümmt und folgt der Verschwenkbewegung, so dass ein exakt formschlüssiger Eingriff zwischen Führung und Eingriffselement möglich ist.

Bevorzugt erstreckt sich die Führung von einer im Gebrauch unteren Seite schräg nach oben, so dass die Verschwenkbewegung des Griffes zum Befestigen am Kochgefäß von oben nach unten erfolgen kann. Dadurch ist eine Griffbefestigung auch dann möglich, wenn das Kochgefäß beispielsweise auf einem Tisch steht, der einem Verschwenken von unten nach oben im Weg stehen würde.

Für eine zusätzliche Sicherheit ist eine zusätzliche Verrieglung zwischen dem Griff und dem Gefäßkörper vorgesehen.

Bevorzugt sind die der Lagesicherung und der Drehmomentaufnahme dienenden Anschlagflächen unmittelbar der Führung und dem Eingriffselement zugeordnet, um einerseits eine kompakte Konstruktion und andererseits eine optimale Kraftaufnahme sicherzustellen.

Ein Ausführungsbeispiel der Erfindung wird nachfolgend anhand der Zeichnungen näher erläutert. Es zeigen:
- Fig. 1: eine Seitenansicht eines Befestigungsbereichs eines erfindungsgemäßen Kochgefäßes,
- Fig. 2: einen Längsschnitt durch die Fig. 1,
- Fig. 3: eine Stirnansicht eines Griffes für das erfindungsgemäße Kochgefäß gemäß Fig. 1,
- Fig. 4: eine Stirnansicht eines Gefäßkörpers eines erfindungsgemäßen Kochgefäßes,
- Fig. 5: ein erster Schritt beim Befestigen eines Griffes am Gefäßkörper, und
- Fig. 6: ein zweiter Schritt beim Befestigen eines Griffes an einem Gefäßkörper.

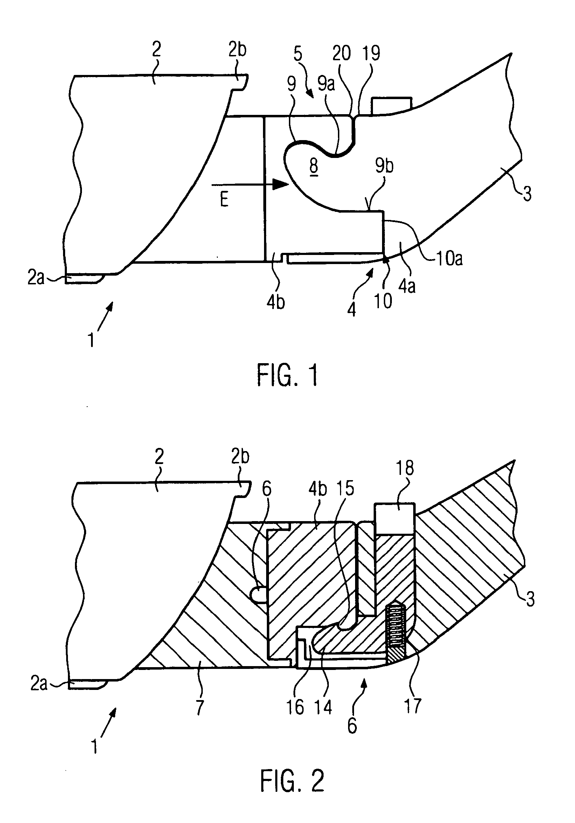

Aus den Fig. 1 und 2 ist in Teildarstellung ein erfindungsgemäß ausgebildetes Kochgefäß 1 mit einem Gefäßkörper 2 mit Boden 2a und oberem Rand 2b, sowie einem Griff 3 ersichtlich, der in eine vorbestimmte Erstreckungsrichtung E weist, d.h. im Gebrauchszustand in dieser Richtung vom Gefäßkörper 2 absteht. Die Erstreckungsrichtung E verläuft in einem ergonomisch günstigen Winkel parallel oder schräg zum Boden 2a. Im dargestellten Ausführungsbeispiel ist das Kochgefäß 1 eine Pfanne mit Stielgriff. Die Erfindung ist jedoch auch auf andere Arten von Kochgefäßen und andere Griffe anwendbar.

Der Griff 3 ist am Gefäßkörper 2 über eine Befestigungseinrichtung 4 lösbar befestigt. Die Befestigungseinrichtung 4 enthält formschlüssige Eingriffsmittel 5 und bevorzugt eine zusätzliche Verriegelung 6.

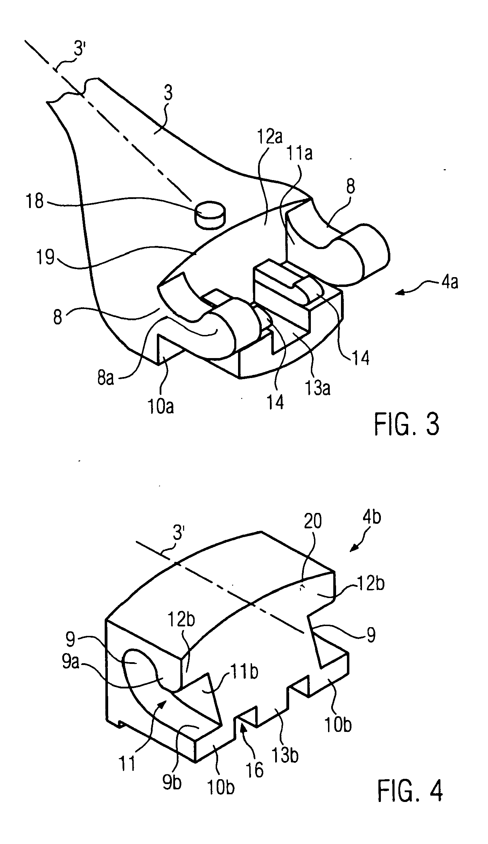

Die Befestigungseinrichtung 4 enthält ein erstes Befestigungsteil 4a (Fig. 3), das dem Griff 3 zugeordnet und bevorzugt einstückig mit diesem ausgebildet ist. Die Befestigungseinrichtung 4 enthält weiterhin ein zweites Befestigungsteil 4b (Fig. 4), das dem Gefäßkörper 2 zugeordnet ist. Das zweite Befestigungsteil 4b kann beispielsweise als Adapter ausgebildet sein, der über eine Schraubverbindung 6 an einem der üblichen Griffhalter 7 am Gefäßrand befestigt ist. Das zweite Befestigungsteil 4b kann aus Metall bestehen, so dass das Kochgefäß 1 mit abgenommenen Griff im Backrohr verwendet, und anschließend mit dem kalten Griff 3 wieder daraus entnommen werden kann. Im dargestellten Ausführungsbeispiel wird die Erstreckungsrichtung E durch die im wesentlichen parallel zum Boden 2a verlaufende Längsachse des zweiten Befestigungsteils 4b definiert, die von der Richtung, in der sich der Griff 3 erstreckt geringfügig abweicht, wie dies bei Pfannen üblich ist.

Die formschlüssigen Eingriffsmittel 5 enthalten Eingriffselemente 8, die in einer Führung 9 aufgenommen sind, wenn der Griff 3 am Gefäßkörper 2 befestigt ist. Im dargestellten Ausführungsbeispiel sind die Eingriffselemente 8 am Griff 3 und die Führung 9 am Gefäßkörper 2, insbesondere am Adapterteil 4b vorgesehen. Im dargestellten Ausführungsbeispiel sind weiterhin zwei Eingriffselemente 8 und zwei Führungen 9 vorgesehen, die mit Abstand zueinander spiegelbildlich beidseitig einer Längsmittelebene 3' angeordnet sind, die sich in Erstreckungsrichtung E senkrecht durch den Griff 3 und den Adapterteil 4b erstreckt. Die beiden Eingriffselemente 8 und die Führung 9 sind identisch ausgebildet, so dass nachfolgend nur jeweils nur eines dieser Teile beschrieben wird. Das Eingriffselement 8 und die Führung 9 weisen komplementäre Außenkonturen auf, so dass sie im wesentlichen spielfrei ineinander passen, wie dies beispielsweise in Fig. 1 zu sehen ist. Sowohl das Eingriffselement 8 als auch die Führung 9 erstrecken sich von einer im Gebrauch unteren Seite (dem Boden 2a zugewandt) schräg zur Erstreckungsrichtung E nach oben in Richtung auf den oberen Rand 2b des Gefäßkörpers 2. Sowohl das Eingriffselement 8 als auch die Führung 9 weisen jeweils einen Hinterschneidungsbereich 8a und 9a, bevorzugt ausgebildet als Haken auf, die quer zur Längsmittelebene 3' verlaufen, wobei der Vorsprung des Hakens 9a an der Führung 9 und die Vertiefung des Hakens 8a am Eingriffselement 8 vorgesehen sind. Die Hinterschneidungsbereiche 8a, 9a sind jeweils an der oberen Fläche angeordnet und dem vorderen Ende des Eingriffselementes 8 bzw. der Führung 9 zugeordnet.

Die Führung 9 ist als Ausnehmung ausgebildet, die im dargestellten Ausführungsbeispiel seitlich am Adapterteil 4b vorgesehen ist und zur Seite hin offen ist. Die Führung 9 kann jedoch auch im Inneren des Adapterteils 4b versenkt sein. Das Eingriffselement 8 ist als vorstehender Steg ausgebildet und so in der Führung 9 aufgenommen, dass die Außenseiten vom Adapterteil 4b und Eingriffselemente 8 miteinander fluchten.

Die Führung 9 verläuft quer zur Erstreckungsrichtung E von unten nach oben und bevorzugt gekrümmt bzw. im Bogen. Auch das Eingriffselement 8 ist dementsprechend gekrümmt.

Die Befestigungseinrichtung 4 enthält weiterhin wenigstens einen Anschlag mit Anschlagflächenpaaren. Im dargestellten Ausführungsbeispiel ist ein erster Anschlag 10 vorgesehen, der so angeordnet ist, dass er die Verschwenkbewegung des Griffes 3 relativ zum Gefäßkörper 2 begrenzt, wenn der Griff 3 sich in der korrekten Position am Gefäßkörper 2 befindet. Der Anschlag 10 befindet sich unterhalb, d.h. an der Bodenseite 2a, der Führung 9 und des Eingriffselementes 8 und enthält Anschlagflächenpaare 10a, 10b am Griff 3 und am Adapter 4b. Die Anschlagflächen 10a, 10b erstrecken sich im Wesentlichen quer zur Längserstreckung 3' und verlaufen im Wesentlichen vertikal. Eine leichte Schrägneigung zur Ebene 3' und/oder zur Erstreckungsrichtung E ist jedoch ebenfalls möglich.

Die Anschlagfläche 10a befindet sich an oder in der Nähe einer Stelle, an der das Eingriffselement 8 vom Griff 3 vorsteht. Die Anschlagfläche 10b befindet sich an oder in der Nähe einer Stelle, an der die Führung 9 mündet.

Um eine seitliche Verlagerung des Griffes 3 relativ zum Gefäßkörper 2 zu verhindern, ist ein weiterer Anschlag 11 mit Anschlagflächenpaaren 11a an den Eingriffselementen 8, und 11b an der Führung 9 vorgesehen, wobei die Anschlagflächen 11a, 11b jeweils die zur Längsmittelebene 3' weisende Begrenzung des Eingriffselementes 8 und der Führung 9 bilden.

Die Wirkung der Anschläge 10, 11 kann noch durch weitere, unterstützend wirkende Anschläge verstärkt werden. So wird beispielsweise die Wirkung des Anschlags 10 durch ein weiteres Anschlagflächenpaar 12a und 12b unterstützt, die sich oberhalb des Eingriffselementes 8 bzw. der Führung 9 bzw. zwischen den beiden Eingriffselementen 8 und Führungen 9 befinden. Die Wirkung des Anschlags 11 kann durch eine Nut- und Federverbindung 13 mit einer Nut 13a und einer Feder 13b verstärkt werden, die im Wesentlichen in Erstreckungsrichtung E verlaufen.

Der Führung 9 ist wenigstens eine Einlauffläche 9b zugeordnet, die in Verlängerung der unteren Begrenzungsfläche der Führung 9 unter dem Hinterschneidungselement (Haken) 9a in Richtung auf den Griff 3 vorsteht. Auf diese Einlauffläche 9b kann das Eingriffselement 8 abgesetzt werden, bevor es durch eine Verschwenkbewegung in Richtung des Pfeils A in die Führung 9 hineingeschwenkt wird.

Die Verriegelung 6 ist als Rastverriegelung ausgebildet und enthält wenigstens einen Haken 14, der bevorzugt am Griff 3 angeordnet ist. Im dargestellten Ausführungsbeispiel enthält die Verriegelung 6 zwei parallel und im Abstand zueinander angeordnete Haken 14, die identisch ausgebildet sind, so dass jeweils nur einer der Haken beschrieben wird. Der Haken 14 hintergreift in bekannter Weise eine Hakenausnehmung 15, die in einer Ausnehmung 16 am Adapterteil vorgesehen ist. Die Ausnehmung 16 ist in Richtung auf den Griff 3 und nach unten zumindest so weit offen, dass der Haken 14 beim Verschwenken in die Ausnehmung 16 eingeschwenkt werden kann und in der Lage ist, mit dem Gegenhaken 15 in Eingriff zu treten, wenn beispielsweise die Anschlagflächen 10a, 10b aneinander anschlagen und die Verschwenkbewegung des Griffes 3 beenden. Der Haken 14 wird durch eine Feder 17 in Eingriff mit dem Gegenhaken 15 gehalten. Um die Verriegelung 6 zu lösen, ist ein Betätigungsknopf 18 vorgesehen, der an der Oberseite des Griffes 3 vorsteht und vom Benutzer gedrückt werden kann, um den Haken 14 nach unten zu bewegen und die Feder 17 zu komprimieren, damit der Haken 14 vom Gegenhaken 15 gelöst werden kann, wenn der Griff 3 zum Abnehmen verschwenkt wird.

Die Eingriffsmittel 5 und die Verriegelung 6 sind derart aufeinander abgestimmt, dass sich Gefäßkörper 2 und Griff 3 bei einer versehentlichen Betätigung des Entriegelungsknopfes 18 nicht zwangsläufig voneinander lösen. Dies wird bevorzugt durch ein Zusammenspiel der Hinterschneidungen 8a, 9a und der Anschläge erreicht, das dafür sorgt, dass der Gefäßkörper 2 sich an den Anschlägen gegen ein Abklappen abstützen kann, durch den Eingriff der Hinterschneidungselemente 8a, 9a gegen ein Abziehen vom Griff 3 und durch Führung 9 und Eingriffselement 8 und durch die ggfs. vorhandene Verbindung 13 gegen ein gewichtsbedingtes Herabfallen geschützt ist. Der Griff 3 kann vielmehr nur durch eine Schwenkbewegung entgegen Pfeil A relativ zum Gefäßkörper 2 gelöst werden, was am einfachsten geht, wenn der Gefäßkörper dabei auf einer Unterlage aufsteht.

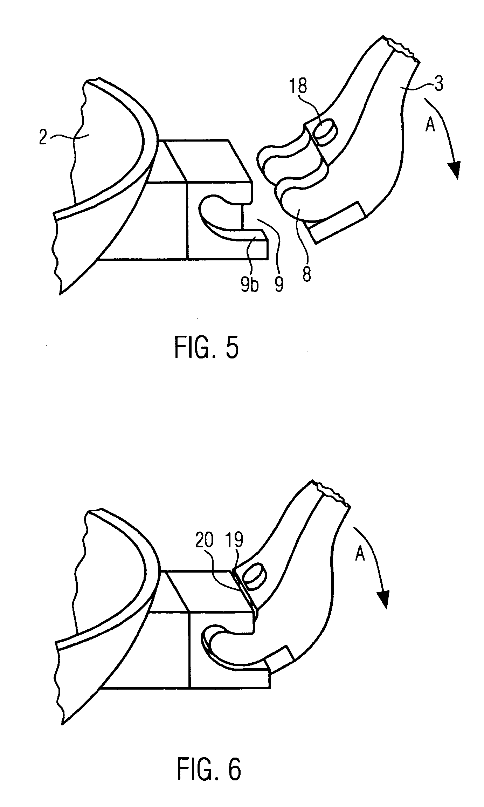

Die Vorgehensweise beim Befestigen des Griffes 3 am Gefäßkörper 2 ist in den Fig. 5 und 6 näher erläutert. Der Griff 3 wird in einer im Wesentlichen senkrechten Stellung mit seinen Eingriffselementen 8 auf die Einlaufflächen 9b der Führung 9 aufgesetzt und anschließend in Richtung des Pfeiles A nach unten geschwenkt, wobei aneinander anschlagende Oberkanten 19 bzw. 20 an den beiden Teilen 4a, 4b der Befestigungseinrichtung 4 als Drehachse wirken. Im Falle einer gekrümmten Führung 9 ist diese zumindest in einem Bereich hinter der Einlauffläche 9b bevorzugt um diese Drehachse gekrümmt. Durch das Verschwenken wird das Eingriffselement 8 in die Führung 9 hineingedreht, bis die Anschlagflächenpaare 10a, 10b aneinander anstoßen und die Verriegelungshaken 14, 15 miteinander in Eingriff treten. Zum Lösen des Griffes 9 muss lediglich der Betätigungsknopf 18 zum Entriegeln betätigt werden, und der Griff 3 kann in Gegenrichtung zur Richtung A aus der Befestigungseinrichtung 4 herausgeschwenkt werden.

In Abwandlung des beschriebenen und gezeichneten Ausführungsbeispiels können die formschlüssigen Eingriffsmittel beispielsweise nur eine einzige Führung für das Eingriffselement enthalten bzw. die Führung kann bis auf eine Eingriffsöffnung verschlossen sein. Führung und/oder Eingriffselement können auch vollständig oder teilweise ungekrümmt, gerade verlaufen. Die Befestigungseinrichtung kann direkt am Gefäßkörper vorgesehen sein. Die Anordnung der Führung und der Eingriffselemente kann umgedreht werden, d.h. die Eingriffselemente können dem Gefäßkörper und die Führung dem Griff zugeordnet sein. Es kann jede geeignete Verriegelung, auch eine vom Benutzer zu betätigende eingesetzt werden. Die Erfindung ist nicht nur zur Befestigung eines Stielgriffs einer Pfanne geeignet, sondern kann zur Befestigung auch anders gearteter Griffe an anderen Kochgefäßen verwendet werden.

## Patentansprüche

1. Kochgefäß (1), insbesondere Pfanne, mit einen Gefäßkörper (2) und einem über eine Befestigungseinrichtung (4) lösbar am Gefäßkörper (2) befestigten Griff (3), wobei die Befestigungseinrichtung (4) formschlüssige Eingriffsmittel (5) mit einer Führung (9) für ein Eingriffselement (8) aufweist, und das Eingriffselement (8) und die Führung (9) durch eine relative Verschwenkbewegung (A) von Griff (3) und Gefäßkörper (2) miteinander in Eingriff bringbar sind, **dadurch gekennzeichnet, dass** das Eingriffselement (8) und die Führung (9) komplementäre Außenkonturen mit jeweils einem Hinterschneidungsbereich (8a, 9a) aufweisen und die Befestigungseinrichtung (4) wenigstens einen Anschlag (12) mit einem quer zur Erstreckungsrichtung (E) des Griffs (3) verlaufenden Anschlagflächenpaar (12a, 12b) zwischen Griff (3) und Gefäßkörper (2) zum Begrenzen der Verschwenkbewegung (A) enthält, das oberhalb des Eingriffselements (8) und der Führung (9) angeordnet ist und aneinander anschlagende Oberkanten (19, 20) vorgesehen sind, die als Drehachse beim Verschwenken des Griffes (3) dienen.

2. Kochgefäß nach Anspruch 1, **dadurch gekennzeichnet, dass** die Befestigungseinrichtung (4) wenigstens einen weiteren Anschlag (10) mit einem quer zur Erstreckungsrichtung (E) des Griffs (3) verlaufenden Anschlagflächenpaar (10a, 10b) zwischen Griff (3) und Gefäßkörper (2) zum Begrenzen der Verschwenkbewegung (A) enthält.

3. Kochgefäß nach Anspruch 2, **dadurch gekennzeichnet, dass** das Anschlagflächenpaar (10a, 10b) unterhalb der Führung (9) und unterhalb des Eingriffselementes (8) angeordnet ist.

4. Kochgefäß nach einem der Ansprüche 1 bis 3, **dadurch gekennzeichnet, dass** die Befestigungseinrichtung (4) wenigstens einen Anschlag (11) mit einem im wesentlichen in Erstreckungsrichtung (E) verlaufenden Anschlagflächenpaar (11 a, 11 b) zwischen Griff (3) und Gefäßkörper (3) zur seitlichen Abstützung enthält.

5. Kochgefäß nach einem der Ansprüche 1 bis 4, **dadurch gekennzeichnet, dass** der Führung (9) eine Einlauffläche (9b) zugeordnet ist.

6. Kochgefäß nach einem der Ansprüche 1 bis 5, **dadurch gekennzeichnet, dass** das Eingriffselement (8) und die Führung (9) komplementäre Außenkonturen aufweisen.

7. Kochgefäß nach einem der Ansprüche 1 bis 6, **dadurch gekennzeichnet, dass** die Führung (9) im Bogen schräg zu einer Erstreckungsrichtung (E) verläuft.

8. Kochgefäß nach einem der Ansprüche 1 bis 7, **dadurch gekennzeichnet, dass** sich die Führung (9) sich von einer unteren Seite nach schräg oben erstreckt.

9. Kochgefäß nach einem der Ansprüche 1 bis 8, **dadurch gekennzeichnet, dass** die Befestigungseinrichtung (4) eine Verriegelung (6) zwischen dem Griff (3) und dem Gefäßkörper (2) enthält.

10. Kochgefäß nach einem der Ansprüche 1 bis 9, **dadurch gekennzeichnet, dass** sich die Führung (9) und das Eingriffselement (8) jeweils von einer quer zur Erstreckungsrichtung (E) des Griffs verlaufenden Anschlagfläche (10a, 10b) eines Anschlags (10) wegerstrecken, und dass Führung (9) und Eingriffselement (8) jeweils durch eine in Erstreckungsrichtung (E) verlaufende Anschlagfläche (11 a, 11 b) eines weiteren Anschlags (11) begrenzt werden.

## Claims

1. Cooking vessel (1), in particular a pan, comprising a vessel body (2) and a handle (3) which is releasably fastened to the vessel body (2) by a fastening device (4), the fastening device (4) having interlocking engagement means (5) comprising a guide (9) for an engagement member (8), and the engagement member (8) and the guide (9) being able to be brought into engagement with one another by a relative pivot movement (A) of the handle (3) and the vessel body (2), **characterised in that** the engagement member (8) and the guide (9) have complementary outer contours each having an undercut region (8a, 9a), and the fastening device (4) comprises at least one stop (12) having a pair of stop faces (12a, 12b) to delimit the pivot movement (A), which extend transversely to the extension direction (E) of the handle (3) and are arranged above the engagement member (8) and the guide (9), between the handle (3) and the vessel body (2), and upper edges (19, 20) which strike one another and act as an axis of rotation when the handle (3) is pivoted are provided.

2. Cooking vessel according to claim 1, **characterised in that** the fastening device (4) comprises at least one further stop (10) having a pair of stop faces (10a, 10b) which extend transversely to the extension direction (E) of the handle (3), between the handle (3) and the vessel body (2) to delimit the pivot movement (A).

3. Cooking vessel according to claim 2, **characterised in that** the pair of stop faces (10a, 10b) is arranged below the guide (9) and below the engagement member (8).

4. Cooking vessel according to any one of claims 1 to 3, **characterised in that** the fastening device (4) comprises at least one stop (11) having a pair of stop faces (11 a, 11 b), which extend substantially in the extension direction (E), between the handle (3) and the vessel body (3) for lateral support.

5. Cooking vessel according to any one of claims 1 to 4, **characterised in that** an entry face (9b) is associated with the guide (9).

6. Cooking vessel according to any one of claims 1 to 5, **characterised in that** the engagement member (8) and the guide (9) have complementary outer contours.

7. Cooking vessel according to any one of claims 1 to 6, **characterised in that** the guide (9) extends in a curve obliquely to an extension direction (E).

8. Cooking vessel according to any one of claims 1 to 7, **characterised in that** the guide (9) extends obliquely upwards from a lower side.

9. Cooking vessel according to any one of claims 1 to 8, **characterised in that** the fastening device (4) comprises a lock (6) between the handle (3) and the vessel body (2).

10. Cooking vessel according to any one of claims 1 to 9, **characterised in that** the guide (9) and the engagement member (8) each extend away from a stop face (10a, 10b), which extends transversely to the extension direction (E) of the handle, of a stop (10), and **in that** the guide (9) and the engagement member (8) are each delimited by a stop face (11a, 11b), which extends in the extension direction (E), of a further stop (11).

## Revendications

1. Récipient de cuisson (1), en particulier poêle, comprenant un corps de récipient (2) et une poignée (3) fixée de manière amovible au corps de récipient (2) par un dispositif de fixation (4), le dispositif de fixation (4) comprenant des moyens de mise en prise à complémentarité de forme (5) dotés d'un guidage (9) pour un élément de mise en prise (8), et l'élément de mise en prise (8) et le guidage (9) pouvant être amenés en prise l'un avec l'autre par un déplacement pivotant (A) relatif de la poignée (3) et du corps de récipient (2), **caractérisé en ce que** l'élément de mise en prise (8) et le guidage (9) comprennent des contours extérieurs complémentaires dotés respectivement d'une zone de contre-dépouille (8a, 9a) et le dispositif de fixation (4) contient au moins une butée (12) dotée d'une paire de surfaces de butée (12a, 12b) s'étendant transversalement à la direction d'extension (E) de la poignée (3) entre la poignée (3) et le corps de récipient (2), destinés à limiter le déplacement pivotant (A) et disposées au-dessus de l'élément de mise en prise (8) et du guidage (9) et des arêtes supérieures (19, 20) venant en butée l'une contre l'autre et servant d'axe de rotation lors du pivotement de la poignée (3) sont prévues.

2. Récipient de cuisson selon la revendication 1, **caractérisé en ce que** le dispositif de fixation (4) contient au moins une autre butée (10) comprenant une paire de surfaces de butée (10a, 10b) s'étendant transversalement à la direction d'extension (E) de la poignée (3) entre la poignée (3) et le corps de cuisson (2) et destinée à limiter le déplacement pivotant (A).

3. Récipient de cuisson selon la revendication 2, **caractérisé en ce que** la paire de surfaces de butée (10a, 10b) est disposée sous le guidage (9) et sous l'élément de mise en prise (8).

4. Récipient de cuisson selon l'une quelconque des revendications 1 à 3, **caractérisé en ce que** le dispositif de fixation (4) contient au moins une butée (11) comprenant une paire de surfaces de butée (11a, 11b) s'étendant sensiblement dans la direction d'extension (E) entre la poignée (3) et le corps de cuisson (3) par rapport à l'élément d'appui latéral.

5. Récipient de cuisson selon l'une quelconque des revendications 1 à 4, **caractérisé en ce qu'**une surface d'admission (9b) est associée au guidage (9).

6. Récipient de cuisson selon l'une quelconque des revendications 1 à 5, **caractérisé en ce que** l'élément de mise en prise (8) et le guidage (9) comprennent des contours extérieurs complémentaires.

7. Récipient de cuisson selon l'une quelconque des revendications 1 à 6, **caractérisé en ce que** le guidage (9) s'étend de façon arquée et en biais par rapport à une direction d'extension (E).

8. Récipient de cuisson selon l'une quelconque des revendications 1 à 7, **caractérisé en ce que** le guidage (9) s'étend d'un côté inférieur vers le haut et de façon oblique.

9. Récipient de cuisson selon l'une quelconque des revendications 1 à 8, **caractérisé en ce que** le dispositif de fixation (4) contient un dispositif de verrouillage (6) entre la poignée (3) et le corps de cuisson (2).

10. Récipient de cuisson selon l'une quelconque des revendications 1 à 9, **caractérisé en ce que** le guidage (9) et l'élément de mise en prise (8) s'étendent respectivement d'une surface de butée (10a, 10b) d'une butée (10) s'étendant transversalement à la direction d'extension (E) de la poignée, et **en ce que** le guidage (9) et l'élément de mise en prise (8) sont respectivement limités par une surface de butée (11a, 11b) d'une autre butée (11) s'étendant dans la direction d'extension (E).
